# NEW EUROPEAN PATENT SPECIFICATION

(11) **EP 1 718 896 B2**
(45) Date of publication and mention of the opposition decision: **23.10.2013**
(45) Mention of the grant of the patent: 14.10.2009
(21) Application number: 05715427.0
(22) Date of filing: 21.02.2005
(51) Int. Cl.: F16L 59/02, F16L 59/14, D04H 1/58

(54) **FORMALDEHYDE-FREE DUCT LINER**
FORMALDEHYDFREIE LEITUNGSAUSKLEIDUNG
DOUBLURE DE CONDUIT SANS FORMALDEHYDE

(30) Priority: 19.02.2004 US 781994
(43) Date of publication of application: 08.11.2006
(73) Proprietor: SAINT-GOBAIN ISOVER, 92400 Courbevoie (FR)
(72) Inventor: YANG, Alain, Villanova, PA 19085 (US); TRABBOLD, Mark, Harleysville, PA 19438 (US)
(74) Representative: Cardin, Elise
(86) International application number: PCT/EP2005/001783
(87) International publication number: WO 2005/080855

(56) References cited:
- EP-A- 0 990 729
- WO-A1-01/23655
- US-A- 3 152 034
- US-A- 3 502 114
- US-A- 3 861 425
- US-A- 4 101 700
- US-A- 5 783 268

## Description

### FIELD OF THE INVENTION

The present invention relates to fiber insulation and, more particularly, to substantially formaldehyde-free duct liners comprising inorganic or organic fibers and, preferably, formaldehyde-free plastic-containing bonding fibers in which the plastic-containing bonding fibers are the binder material.

### BACKGROUND OF THE INVENTION

Ducts and conduits are used to convey air in building heating, ventilation and air conditioning (HVAC) systems. In many applications, especially in commercial and industrial constructions, the ducts are lined with flexible thermal and acoustic insulating material. The lining enhances the thermal efficiency of the duct work and reduces noise associated with movement of air therethrough. Duct liners may comprise any suitable organic material or inorganic material, e.g., mineral fibers such as fiber glass insulation or the like. Typical fiber glass duct liners, for example, are constructed as fiber glass mats having densities of about 1.5 to 3 pounds per cubic foot (pcf) and thicknesses of about 0.5 to 2 inches.

To prevent fiber erosion due to air flow, the insulation may include a coating or a facing layer on its inner or "air stream" surface. The air stream surface of the insulation is the surface that conveys air through the duct and is opposite the surface that contacts the duct sheet metal in the final duct assembly. Examples of such duct liners are provided in United States Patent Nos. 3,861,425 and 4,101,700. Several insulation duct liners are marketed under the trade designations Toughgard^{®} by CertainTeed Corp. of Valley Forge, PA, Aeroflex^{®} and Aeromat^{®} by Owens Corning Fibersglas Corp. of Toledo, OH, Permacote^{®}, and Polycoustic^{™} by Johns Manville Corp. of Denver, CO.

As an alternative to coated duct liners, manufacturers such as CertainTeed Corp. and Knauf Fiber Glass GmbH offer duct liners having glass fiber insulation covered with a layer of non-woven facing material which defines the air stream surface of those products. The facing material produces a durable surface that protects the air duct from fiber erosion.

In traditional duct liners, phenolic powder resin binders are used to bond the fibers together. These resin binders, such as phenol-formaldehyde, generally contain formaldehyde. Although there is no health risk with the traditional fiber glass duct liners using formaldehyde-containing binders, formaldehyde at higher levels may cause skin irritation and sensitivity. In consideration of such concerns, manufacturers of insulation products have started to offer formaldehyde-free products to provide the consumers an alternative to the traditional insulation products including duct liners.

These currently existing formaldehyde-free insulation products use water soluble acrylic binders that are formaldehyde-free in place of the phenolic powder resin binders. Some examples of formaldehyde-free binders used in such applications can be found in United States Patent 5,932,665 and EP 0990729. However, because these acrylic binders are applied in aqueous form, they are generally more difficult to use in manufacturing process compared to binders in dry form. Thus, there is a need for formaldehyde-free duct liners fabricated with dry formaldehyde-free binders without compromising on the manufacturability and the performance characteristics of the duct liners.

### SUMMARY OF THE INVENTION

According to an aspect of the present invention, substantially formaldehyde-free duct liners are disclosed. The duct liners according to an embodiment of the present invention comprise at least one fiber component, that may be virgin textile glass fibers, blended with a non-liquid substantially formaldehyde-free binder bonding at least a portion of the fiber component to produce formaldehyde-free duct liners that have a substantially uniform density throughout their volume.

In an embodiment of the present invention, the non-liquid substantially formaldehyde-free binder is substantially the only binder material used in the duct liner.

In another embodiment of the present invention, the fiber component of the substantially formaldehyde-free duct liners may comprise textile glass fibers, rotary glass fibers, organic fibers, or natural fibers such as wood fibers, hemp fibers, cellulose fibers, etc. or a combination thereof. Preferably, these fibers are virgin fibers that have not been previously treated or otherwise processed with any formaldehyde-containing chemicals such as formaldehyde-containing binders. By employing one or more of these fibers in the formulation for the formaldehyde-free duct liners, it is possible to customize the final properties of the duct liners.

The non-liquid substantially formaldehyde-free binder are plastic-containing bonding fibers and, a powder binder, i.e. a mixture thereof. The plastic-containing bonding fibers may be thermoplastic polymer fibers, thermo-setting polymer fibers prior to heating and/or curing, or combinations thereof. They may also be mono-component, bi-component or a combination thereof. The mono-component polymeric fibers are solid or tubular fibers of a single polymeric material. The bi-component polymeric fibers may be of the sheath-core construction wherein the sheath material has a lower melting point than the core material. The bi-component polymeric fibers may be of other constructions. For example, the two components may have side-by-side or segmented pie construction in cross section. Plastic coated inorganic fibers, such as thermoplastic sized or thermosetting plastic-coated glass fibers may also be used.

When plastic-containing bonding fibers are used as the non-liquid substantially formaldehyde-free binder, the fiber component and the plastic-containing bonding fibers are uniformly blended and bonded together by a portion of the plastic of the plastic-containing bonding fibers.

A facing layer is applied to at least one side of the fiber mat that forms the body of the duct liner. The facing layer is generally applied to the "air stream" surface of the duct liner. The facing layer is typically a non-woven scrim.

In addition to being substantially formaldehyde-free, the plastic-containing bonding fibers in general provide stronger adhesion between the duct liner's fiber mat body and the facing layer because of the rooting effect of the plastic-containing bonding fibers. Rooting effect refers to the fact that many of the plastic-containing bonding fibers near the surface of the fiber mat that bonds to the facing layer extends into the bulk of the fiber mat. Because these bonding fibers are also bonded to the other fibers (glass fibers as well as other bonding fibers) within the fiber mat, analogous to tree roots in the ground, they securely bond the facing layer to the fiber mat. Furthermore, by using bi-component polymeric fibers, the plastic-containing bonding fibers may also provide reinforcement for the duct liner.

The powdered binders may be any suitable formaldehyde-free thermoplastic or thermosetting powdered binders such as thermoplastic or heat-curable thermosetting resin. The powdered binders are used in combination with the plastic-containing bonding fibers and blended with the fiber component of the duct liners.

The use of these formaldehyde-free binders allow the duct liner fabrication process to remain dry which is generally simpler than using the liquid acrylic binders as the formaldehyde-free binder. The process would consume less energy because there is no water to vaporize. The duct liner and/or the facing layer may be treated with anti-microbial agent to resist growth of fungi or bacteria.

### BRIEF DESCRIPTION OF THE DRAWINGS

FIGURE 1 is a cross-sectional view of an exemplary embodiment of a duct liner according to an aspect of the present invention;

FIGURE 2 is a schematic illustration of an apparatus for forming the duct liner of the present invention;

FIGURE 3a-3c are detailed schematic illustrations of the bale openers of the apparatus of FIGURE 2;

FIGURE 4 is a detailed schematic illustration of another section of the apparatus of FIGURE 2; and

FIGURE 5 is a flow chart diagram of a process for forming the exemplary duct liner of FIGURE 1.

The features shown in the above referenced drawings are not intended to be drawn to scale nor are they intended to be shown in precise positional relationship. Like reference numbers indicate like elements.

### DETAILED DESCRIPTION OF THE INVENTION

According to an aspect of the present invention, the substantially formaldehyde-free duct liners are formed by blending at least one fiber component with at least one non-liquid substantially formaldehyde-free binder. The formaldehyde-free binder are plastic-containing bonding fibers in combination with powdered binders other than phenol-formaldehyde type binders. The plastic-containing bonding fiber or other binder or their combination in the final product may be between about 10 to 30 wt. % and preferably between 12 to 25 wt. % and more preferably about 15 to 20 wt. % of the final product.

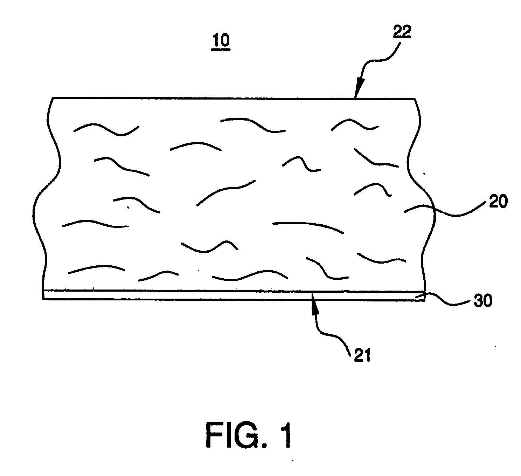

FIGURE 1 is a cross-sectional view of an exemplary substantially formaldehyde-free duct liner **10** comprising a final fiber mat **20** having a first side **21,** a second side **22** and a non-woven scrim facing layer bonded to the first side **21.** The final fiber mat **20** and, thus, the duct liner **10** has a density of about 16 to 56 kg/m³ and preferably about 24 to 48 kg/m³. The gram weight of the duct liner **10** is in the range of about 50 to 350 gm/m² and preferably about 65 to 310 gm/m². The thickness of the duct liner may be in the range of about 0.6 to 25.4 cm and preferably about 1.3 to 20.3 cm.

In one embodiment of the present invention, the fiber component of the substantially formaldehyde-free duct liners may comprise textile glass fibers, rotary glass fibers, organic fibers, or natural fibers such as wood fibers, hemp fibers, and cellulose fibers, etc. or a combination thereof. By employing one or more of these fibers in the formulation for the duct liners, it is possible to customize the final properties of the duct liners.

According to one preferred embodiment of the present invention, the fiber component of the substantially formaldehyde-free duct liner may be textile glass fibers. The textile glass fibers used in the duct liner product of the present invention may have diameters of greater than about 1 micrometer to 20 micrometers and more preferably about 5 micrometers up to about 16 micrometers and they are generally precut into fiber segments having average length of about 1 to 20 cm and more preferably about 2.5 to 12.5 cm.

In another embodiment of the present invention, the fiber component of the substantially formaldehyde-free duct liners may be rotary fibers. Rotary fibers are generally made by spinners using centrifugal force to extrude molten glass or polymer through small openings in the sidewall of a rotating spinner. Rotary fibers are generally smaller in diameter than textile glass fibers and may be in the range of about 2 to 5 µm. Rotary fibers have average length of up to about 12.7 cm (5 inches). The textile glass fibers and the rotary fibers may be used in combination to form the final mat 20.

In another embodiment of the present invention, the textile glass fibers and the rotary fibers described above may be used in combination for the fiber component of the formaldehyde-free duct liners. In other embodiments of the present invention, organic fibers or natural fibers such as wood fibers, hemp fibers, and cellulose fibers, etc., may be used. These fibers may be used in any combination for the fiber component of the duct liner.

The plastic-containing bonding fibers used as the binder in the substantially formaldehyde-free duct liner of the present invention may comprise thermoplastic resin, thermosetting resin, or both. The plastic-containing bonding fibers may be bi-component type polymeric fibers, mono-component type polymeric fibers, plastic-coated mineral fibers, such as, thermoplastic-coated glass fibers, or a combination thereof. The bi-component polymeric fibers are commonly classified by their fiber cross-sectional structure as side-by-side, sheath-core, islands-in-the sea and segmented-pie cross-section types. In a preferred embodiment of the present invention, the sheath-core type bi-component polymer fibers are used.

If higher strength is desired in the final product, concentric type sheath-core bi-component polymer fibers may be used. If bulkiness is desired in the final product, eccentric type sheath-core bi-component polymer fibers may be used.

The bi-component polymeric fibers have a core material covered in a sheath material that has a lower melting temperature than the core material. Both the core and the sheath material may be a thermoplastic polymer such as, for example, polyethylene, polypropylene, polyester, polyethylene teraphthalate, polybutylene teraphthalate, polycarbonate, polyamide, polyvinyl chloride, polyethersulfone, polyphenylene sulfide, polyimide, acrylic, fluorocarbon, polyurethane, or other thermoplastic or thermosetting polymers. The core and the sheath materials each may be made of different thermoplastic or thermosetting polymers or they may be made of the same thermoplastic or thermosetting polymers but of different formulation so that the sheath material has lower melting point than the core material. Typically, the melting point of the sheath is between about 110° and 180° Centigrade. The melting point of the core material is typically about 260° Centigrade. The bi-component polymeric fibers used in the duct liner of the present invention may have an average fiber diameter of about 10 to 20 µm and preferably about 16 µm. The average length of the bi-component plastic-containing bonding fibers is between about 0.63 to 12.7 cm and preferably between about 5.1 to 10.2 cm.

In the present invention, the non-liquid substantially formaldehyde-free binder may be any suitable thermoplastic powdered binder or thermosetting resin powdered binder. The powder binder is used in combination with the plastic-containing bonding fibers and blended with the fiber component of the duct liners. An example of a thermoplastic powder binder is VINNEX^{®} polymer powder binders available from Wacker-Chemie GmbH. Mixing with the plastic-containing bonding fibers may be particularly beneficial when the plastic-containing bonding fibers are bi-component polymeric fibers. Because the core component of the bi-component polymeric fibers remain in fiber form to provide reinforcement to the duct liner, making the duct liner very strong for handling in the field during duct fabrication. By using a mix of the bi-component polymeric fibers and a powder binder in varying proportions, the toughness of the duct liners can be controlled for ease of cutting.

In this exemplary embodiment of the substantially formaldehyde-free duct liner, a facing layer **30** is bonded to the first side **21** of the fiber mat **20.** In another embodiment, facing layers may be bonded to both the first side **21** and the second side **22** of the fiber mat **20** if necessary. At least one of the two sides of the duct liners will generally have a facing **30** to be designated as the air stream surface. The facing layer **30** is preferably a bonded non-woven scrim made of randomly oriented glass or resinous fibers bonded with adhesive or melt bonds. A preferred material for the non-woven scrim for this application includes glass fibers in a formaldehyde-free resinous binder. More preferred materials include a thin, bonded, non-woven fiber glass mat oriented in a random pattern, having sized glass fibers bonded with a formaldehyde-free resinous binder, preferably of the same composition of the binder used to join the fibers in mat **20,** but can also be a compatible resin.

An exemplary non-woven scrim layer may be formed from a sheet of non-woven material comprising randomly oriented inorganic fibers, and in a preferred embodiment, randomly oriented glass fibers. Non-woven materials are sheets of randomly oriented natural or synthetic fibers, such as polyolefins, polyamide (*i*.*e*. nylon), polyester or rayon, or glass often held in a sheet form by a binder. Binders typically used in the non-wovens are based on a polymeric material, such as an acrylic resin, a vinyl-acrylic resin, etc. To be used in the fabrication of the formaldehyde-free duct liners of the present invention, the non-woven material must also be made with formaldehyde-free binders. In an exemplary embodiment, the non-woven layer **91,** for example, is glass fiber non-wovens available from Lydall Industrial Thermal Solutions, Inc. as MANNIGLAS^{®} 1900 or MANNIGLAS^{®} 1908. These non-wovens are made with formaldehyde-free binders. Generally, thinner scrim materials are preferred, because they allow better penetration of the binder material that bonds the non-woven scrim **30** to fiber mat **20.**

The formaldehyde-free duct liners of the present invention is produced in accordance with air laid processing steps generally known in the art. The particular configuration of the fabrication apparatus used, however, may vary depending on the number and the type of fibers used for the fiber components and the number and the types of formaldehyde-free binders used.

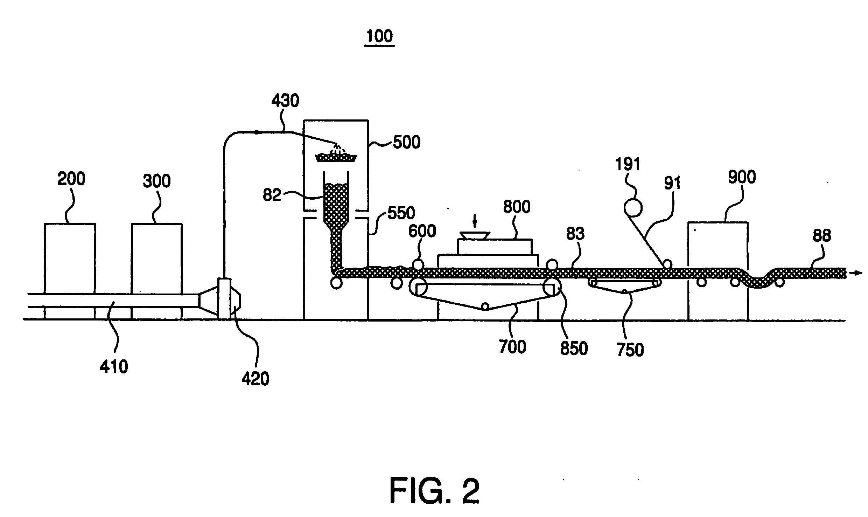

As an example, an air laid process that may be employed in fabricating duct liners according to an embodiment of the present invention will now be described. In a preferred method of forming the duct liners of the present invention, an air laid non-woven process equipment available from DOA (Dr. Otto Angleitner G.m.b.H. & Co. KG, A-4600 Wels, Daffingerstasse 10, Austria), apparatus **100** illustrated in FIGURES 2-5, may be used. In this example, a formaldehyde-free duct liner of the invention is formed by blending textile glass fibers with bi-component polymer fibers as the binder. As illustrated in FIGURE 2, the apparatus **100** includes bale openers **200** and **300,** one for each type of fiber. The textile glass fibers are opened by the bale opener **200** and the bi-component polymer fibers are opened by the bale opener **300.**

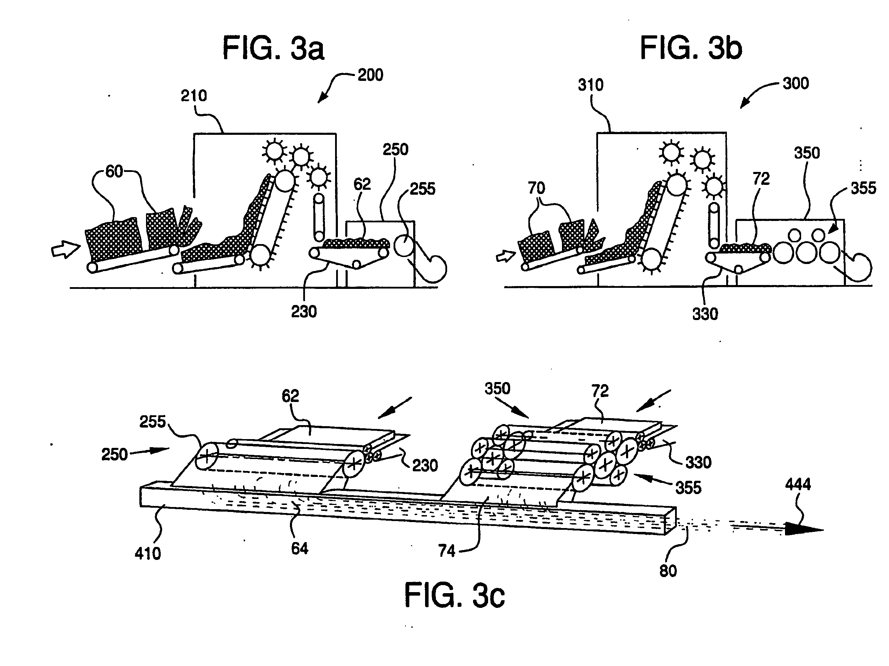

FIGURE 3a is a detailed illustration of the bale opener **200.** The textile glass fibers are provide in bulk form as bales **60.** The bales **60** are fed into the bale opener which generally comprise a coarse opener **210** and a fine opener **250.** The fibers in the bales **60** may be pre-chopped or cut into segments of about 1 to 20 cm and more preferably about 2.5 to 12.5 cm long to enhance the fiber opening process. After being opened by the coarse opener **210,** the textile glass fibers are weighed by an opener conveyor scale **230.** The opener conveyor scale **230** monitors the amount of opened textile glass fibers being supplied to the process by continuously weighing the supply of the opened textile fibers **62** as they are being conveyed. Next, the coarsely opened textile glass fibers are finely opened by the fine opener's picker **255.** The opening process fluffs up the fibers to decouple the clustered fibrous masses in the bales and enhances fiber-to-fiber separation.

FIGURE 3b is a detailed illustration of the bale opener **300.** The bi-component polymer fibers are provided in bulk form as bales **70.** The bales **70** are fed into the bale opener **300.** The polymer fibers are first opened by a coarse opener **310** and weighed by an opener conveyor scale **330.** The opener conveyor scale **330** monitors the amount of the opened plastic-containing bonding fibers being supplied to the process by continuously weighing the supply of the opened polymer fibers **72.** Next, the coarsely opened polymer fibers are finely opened by the fine opener **350** and its pickers **355.** For illustrative purpose, the fine opener **350** is shown with multiple pickers **355.** The actual number and configuration of the pickers would depending on the desired degree of separation of the opened fibers into individual fibers. The bale openers **200** and **300,** including the components described above, may be provided by, for example, DOA's Bale Opener model 920/920TS.

Illustrated in FIGURE 2 is a pneumatic transport system **400** for transporting the opened fibers from the bale openers **200** and **300** to the down stream processing stations of the apparatus **100.** The pneumatic transport system **400** comprises a primary air blower **405;** a first transport conduit **410** in which the opened fibers are blended; a secondary air blower **420;** and a second transport conduit **430** for transporting the blended fibers up to the fiber condenser **500.**

FIGURE 3c illustrates opened textile glass fibers **64** and opened bi-component polymer fibers **74** being discharged into the first transport conduit **410** from their respective fine openers **250** and **350.** The airflow in the first transport conduit **410** generated by the primary air blower **405** is represented by the arrow **444.** The opened fibers **64** and **74** enters the air stream and are blended together into blended fibers **80.** The ratio of the textile glass fibers and the bi-component polymer fibers are maintained and controlled at a desired level by controlling the amount of the fibers being opened and discharged by the bale openers using the weight information from the opener conveyor scales **230** and **330.** As mentioned above, the conveyor scales **230, 330** continuously weigh the opened fiber supply for this purpose. In this example, the fibers are blended in a given ratio to yield the final duct liner mat containing about 15 to 20 wt. % of the plastic-containing bonding fibers.

Although one opener per fiber component is illustrated in this exemplary process, the actual number of bale openers utilized in a given process may vary depending on the particular need. For example, one or more bale openers may be employed for each fiber component.

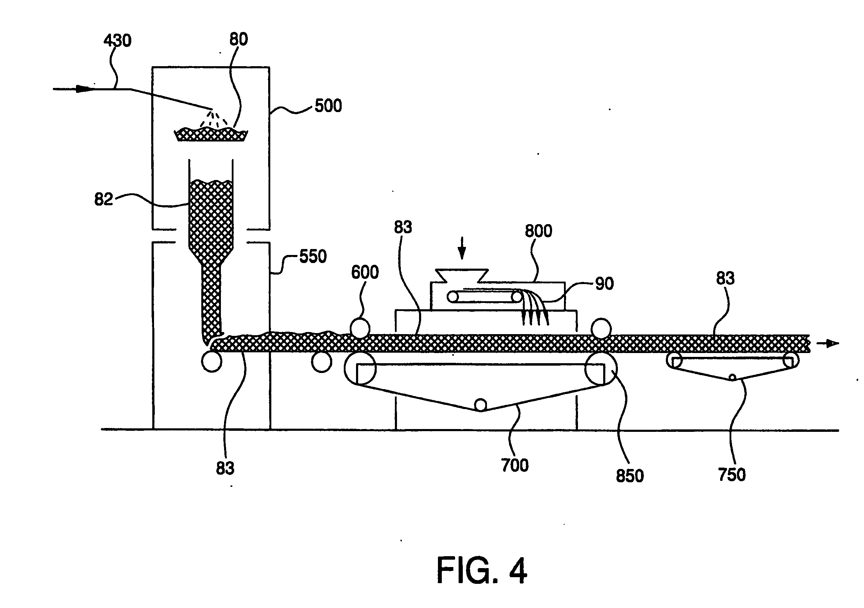

The blended fibers **80** are transported by the air stream in the pneumatic transport system **400** via the second transport conduit **430** to a fiber condenser **500.** Referring to FIGURE 4, the fiber condenser **500** condenses the blended fibers **80** into less airy fiber blend **82.** The condensing process separates air from the blend without disrupting the uniformity (or homogeneity) of the blended fibers. The fiber blend **82** is then formed into a continuous sheet of mat **83,** which has yet to be bonded or cured depending upon whether a thermoplastic or thermosetting resin bonding agent is employed, by the feeder **550.** At this point, the mat **83** may be optionally processed through a sieve drum sheet former **600** to adjust the openness of the fibers in the mat **83.** The mat **83** is then transported by another conveyor scale **700** during which the mat **83** is continuously weighed to ensure that the flow rate of the blended fibers through the fiber condenser **500** and the sheet former **600** is at a desired rate. The conveyor scale **700** is in communication with the first set of conveyor scales **230** and **330** in the bale openers. Through this feed back loop set up, the weight of the opened fibers measured at the conveyor scales **230** and **330** are compared to the weight of the mat **83** measured at the conveyor scale **700** to determine whether the amount of the opened fibers being fed into the process at the front end matches the rate at which the mat **83** is being formed at the feeder **550.** Thus, the feed back loop set up effectively compares the feed rate of the opened fibers and the flow rate of the blended fibers through the feeder **550** and adjusts the speed of the bale openers and the rate at which the bales are being fed into the openers. This ensures that the bale openers **200** and **300** are operating at appropriate speed to meet the demand of the down stream processing. This feed back set up is used to control and adjust the feed rate of the opened fibers and the line speed of the conveyor scale **700** which are the primary variables that determine the gram weight of the mat **83.** The air laid non-woven process equipment **100** may be provided with an appropriate control system (not shown), such as a computer, that manages the operation of the equipment including the above-mentioned feed back function.

In an example not included in the present invention that uses a formaldehyde-free powder binder rather than the plastic-containing bonding fibers, a powder binder feeder **800** may be provided to apply the powder binder 90 to the mat **83.** The powder binder feeder **800** may be positioned to apply the powder binder **90** evenly over the mat **83** as the mat is leaving the conveyor scale **700.**

A second sieve drum sheet former **850** is used to further adjust the fibers' openness and blend with powder binder (if used) before curing or heating the mat **83.** A conveyor **750** then transports the mat **83** to a curing or heating oven **900** (FIGURE 2). For example, the condenser **500,** feeder **550,** sieve drum sheet former **600,** conveyor scale **700,** powder binder feeder **800,** and the second sieve drum sheet former **850** may be provided using DOA's Aerodynamic Sheet Forming Machine model number 1048.

In one embodiment of the present invention, a continuous web of glass fiber non-woven facing layer **91** may be dispensed from a roll **191** and is applied to at least one of the two major sides of the mat **83** before the mat **83** enters the curing or heating oven **900.** The non-woven facing layer **91** is applied to the major side of the mat **83** intended to be the air stream surface of the duct liner. In the exemplary process illustrated in FIGURE 2, the non-woven facing layer **91** is applied to the major side that is the top side of the mat **83** as it enters the curing or heating oven **900,** but depending on the particular need and preference in laying out the fabrication process, the non-woven facing layer **91** may be applied to the bottom side of the mat **83.** In another embodiment of the present invention, a non-woven facing layer may be applied to both sides of the mat **83.**

After the non-woven layer **91** is applied, the mat **83** is then fed into a curing or heating oven **900** to cure or heat the plastic-containing bonding fibers. Whether this process step is a curing step or a heating step depends on whether the binding agent used, the plastic-containing bonding fibers, is a thermoplastic type or a thermosetting type polymer. The curing or heating oven **900** is a belt-furnace type. The curing or heating temperature is generally set at a temperature that is higher than the curing or melting temperature of the binder material. In this example, the curing or heating oven **900** is set at a temperature higher than the melting point of the sheath material of the bi-component polymeric fibers but lower than the melting point of the core material of the bi-component polymeric fibers. In this example, the bi-component polymer fibers used is Celbond type 254 available form KoSa of Salisbury, North Carolina, whose sheath has a melting point of 110°C. And the curing or heating oven temperature is preferably set to be somewhat above the melting point of the sheath material at about 145°C. The sheath component will melt and bond the textile glass fibers and the remaining core of the bi-component polymeric fibers together into a final mat **88** having a substantially uniform density throughout its volume. The plastic-containing bonding fibers are in sufficient quantity in the mat **83** to bond the non-woven layer **91** to the mat. The core component of the bi-component polymeric fibers in the final mat **88** provide reinforcement to the resulting duct liner.

In another embodiment of the present invention, the curing or heating oven **900** may be set to be at about or higher than the melting point of the core component of the bi-component polymeric fiber. This will cause the bi-component fibers to completely or almost completely melt and serve generally as a binder without necessarily providing reinforcing fibers. Because of the high fluidity of the molten plastic fibers, the glass fiber mat will be better covered and bounded. Thus, less plastic-containing bonding fibers may be used.

In another embodiment of the present invention, mono-component polymeric fibers may be used as the binder rather than the bi-component polymeric fibers. The mono-component polymeric fibers used for this purpose may be made from the same thermoplastic polymers as the bi-component polymeric fibers. The melting point of various mono-component polymeric fibers will vary and one may choose a particular mono-component polymeric fiber to meet the desired curing or heating temperature needs. Generally, the mono-component polymeric fibers will completely or almost completely melt during the curing or heating process step and bind the textile glass fibers.

In an example not included in the present invention, a powder binder may be used rather than the plastic-containing bonding fibers. The curing or heating oven **900** will be set at a temperature appropriate to cure the powder binder. In the invention the powder binder and the plastic-containing bonding fibers are used in combination, preferably the powder binder is selected to have a curing or melting temperature that matches the melting point of the plastic-containing bonding fibers to allow the fiber mat to be cured or formed into a final mat in a single pass through the curing or heating oven **900.**

After the curing or heating step, a series of finishing operations transform the final mat **88** into a duct liner. The final mat **88** exiting the curing or heating oven **900** is cooled in a cooling section (not shown) and then the edges of the mat are cut to form a mat having a desired width. Then, the edges and the non-woven scrim are coated with water resistant epoxy foam which makes the duct liner resistant to water penetration. The coated mat is then dried, cooled, sized into desired lengths and packaged. The duct liner and/or the facing layer may be further treated with anti-microbial agent to resist growth of fungi or bacteria.

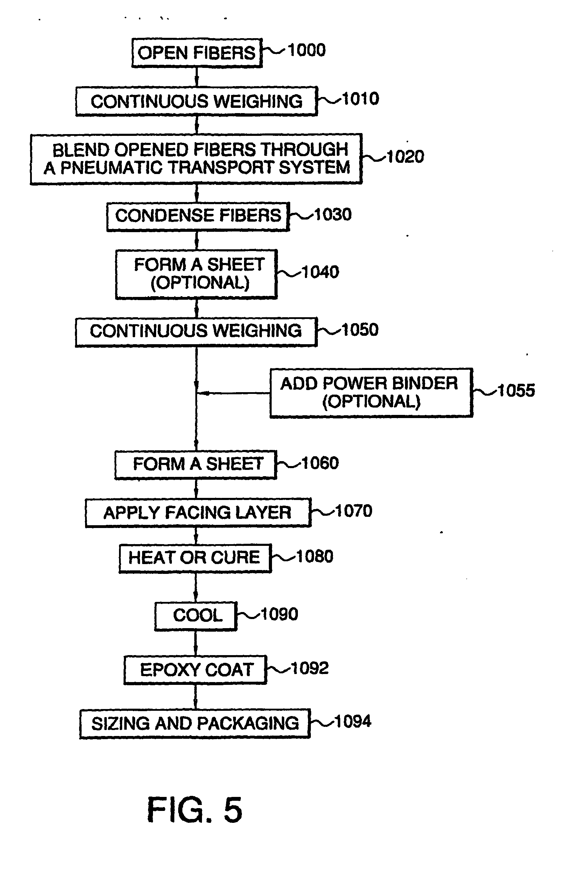

FIGURE 5 is a flow chart diagram of the exemplary process.

At step **1000,** the bales of the at least one fiber component of the duct liner are opened. If plastic-containing bonding fibers are used as the binder then the bonding fibers are also opened at this step.

At step **1010,** the opened fibers are weighed continuously by one or more conveyor scales to control the amount of each fibers being supplied to the process ensuring that proper ratio of fiber(s) are blended.

At step **1020,** the opened fibers are blended and transported to a fiber condenser by a pneumatic transport system which blends and transports the opened fiber(s) in an air stream through a conduit.

At step **1030,** the opened fibers are condensed into more compact fiber blend and formed into a continuously feeding sheet of mat by a feeder.

At an optional step **1040,** a sieve drum sheet former may be used to adjust the openness of the fiber blend in the mat.

At step **1050,** the mat is continuously weighed by a conveyor scale to ensure that the flow rate of the blended fibers through the fiber condenser and the sheet former is at a desired rate. The information from this conveyor scale is fed back to the first set of conveyor scale(s) associated with the bale openers to control the bale opener(s) operation. The conveyor scales ensure that a proper supply and demand relationship is maintained between the bale opener(s) and the fiber condenser and sheet former.

At step **1055,** a powder binder may be applied to the mat as the continuously fed mat is leaving the conveyor scale.

At step **1060,** a second sieve drum sheet former blends the powder binder into the fiber matrix of the mat and adjusts the openness of the fibers to a desired level.

At step **1070,** a non-woven scrim facing may be applied to at least one side of the mat before the curing and/or heating step.

At step **1080,** the mat is converted into a final mat by being cured and/or heated in a belt-furnace type curing or heating oven. The curing or heating oven is set at a temperature higher than the curing or thermosetting temperature of the particular formaldehyde-free binder being used.

At step **1090,** the final mat is cooled.

At step **1092,** the edges of the final mat and the non-woven scrim facing is coated with epoxy foam to provide water resistant surface to the final duct liner and cooled.

At step **1094,** the coated final mat is cut to desired sizes and packaged for storage or shipping. At this step, the duct liner and/or the facing layer may be treated with anti-microbial agent to resist growth of fungi or bacteria.

According to another embodiment of the present invention, a reinforcement layer of a glass non-woven sheet may be used as a base layer for the duct liner of the present invention to provide additional mechanical support. The non-woven sheet may be applied to the mat **83** at the bottom to the mat **83** and heated or cured together. The binding action of the plastic-containing bonding fibers at the elevated temperature in the subsequent curing or heating step bonds the non-woven sheet to the mat **83.**

The plastic-containing bonding fiber or other binder or their combination in the final product may be between about 10 to 30 wt. % and preferably between 12 to 25 wt. % and more preferably about 15 to 20 wt. %.

The use of the plastic-containing bonding fibers as the formaldehyde-free binder allows the duct liner fabrication process to remain dry which is simpler than using acrylic liquid binders as the formaldehyde-free binder. Also, because the curing or melting temperature for plastic-containing bonding fibers is lower than that of the conventional phenolic resin binders, the manufacturing process associated with the formaldehyde-free glass fiber duct liners consumes less energy. For example, the curing or heating ovens used in the manufacturing process described above are set to be less than about 200°C and preferably about 145°C rather than about 205° C or higher typically required for curing phenol resin binders. Also, because of the absence of formaldehyde out gassing from the binder material during the fabrication process, there is no need for special air treatment equipment to remove formaldehyde from the curing or heating oven's exhaust. These advantages translate into lower manufacturing cost and less air pollution.

The use of the plastic-containing bonding fibers also improves the durability of the duct liner because the plastic-containing bonding fibers provide stronger adhesion between the glass fiber mat and the non-woven facing material. Furthermore, unlike the thermosetting phenolic resin binders, that are rigid and brittle when cured, the plastic-containing bonding fibers are thermoplastic polymers and are more flexible and less likely to crack and generate dust through handling. Thus, less dust is generated during the production of the duct liners as well as at the job sites where the duct liners are applied to the metal ducts.

The color of the basic duct liner mat as produced from the above-described process is generally white. The color may be easily customized by adding appropriate coloring agents, such as dyes or colored pigments.

## Claims

1. A substantially formaldehyde-free duct liner (10) comprising:
a fiber component (60, 62) and
a non-liquid substantially formaldehyde-free binder (70, 72) bonding at least a portion of said fiber component (60, 62) together, wherein said duct liner (10) has a substantially uniform density throughout its volume, said non-liquid substantially formaldehyde-free binder comprises plastic-containing bonding fibers, wherein said fiber component and said plastic-containing bonding fibers being uniformly blended and bonded together by a portion of the plastic of said plastic-containing bonding fibers and said non-liquid substantially formaldehyde-free binder comprises a thermoplastic or thermosetting powder binder,
said duct liner has a first side and a second side and further comprises a facing layer bonded to at least one of the two sides.

2. The duct liner (10) of claim 1, wherein said non-liquid formaldehyde-free binder (70, 72) is substantially the only binder in said duct liner (10).

3. The duct liner (10) of claim 1, wherein said fiber component (60, 62) comprises virgin textile glass fibers.

4. The duct liner (10) of claim 1 or 2, wherein said fiber component (60, 62) comprises virgin textile glass fibers, virgin rotary glass fibers, wood fibers, hemp fibers, cellulose fibers or a combination thereof.

5. The duct liner (10) of claim 3 or 4, wherein said textile glass fibers have an average fiber diameter of about 1 to 20 micrometers.

6. The duct liner of claims 3 to 5, wherein said textile glass fibers have an average fiber diameter of about 5 to 16 micrometers.

7. The duct liner of claims 3 to 6, wherein said textile glass fibers have an average fiber length of about 1 to 20 cm.

8. The duct liner of claims 3 to 7, wherein said textile glass fibers have an average fiber length of about 2.5 to 12.5 cm.

9. The duct liner claims 1 to 8, wherein said non-liquid substantially formaldehyde-free binder is about 10 to 30 wt. % of the duct liner.

10. The duct liner of claims 1 to 9, wherein said non-liquid substantially formaldehyde-free binder is about 12 to 25 wt. % of the duct liner.

11. The duct liner of claims 1 to 10, wherein said non-liquid substantially formaldehyde-free binder is about 15 to 20 wt.% of the duct liner.

12. The duct liner of claims 1 to 11, wherein said duct liner has a density of 16 to 56 kg/m³.

13. The duct liner of claims 1 to 12, wherein said duct liner has a density of 24 to 48 kg/m³.

14. The duct liner of claims 1 to 13, wherein said duct liner has a gram weight of 50 to 350 gm/m².

15. The duct liner of claims 1 to 14, wherein said duct liner has a gram weight of 65 to 310 gm/m².

16. The duct liner of claims 1 to 15, wherein said duct liner has a first side and a second side and further comprises a facing layer bonded to at least one of the two sides.

17. The duct liner of claim 11, wherein said facing layer is a non-woven scrim sheet of randomly
oriented natural or synthetic fibers.

18. The duct liner of claim 17, wherein said non-woven scrim is made from fibers of glass, polyolefin, polyamide, polyester or rayon.

19. The duct liner of claims 11 to 18, wherein at least one of said duct liner and said facing layer is treated with a water resistant additive made of epoxy foam, acrylic or asphalt.

20. The duct liner of claims 11 to 19, wherein at least one of said duct liner and said facing layer is treated with an anti-microbial agent.

21. The duct liner of claim 1 to 20, wherein said at least one non-liquid formaldehyde-free binder is a mixture of plastic-containin bonding fibers and at least one formaldehyde-free powder binder.

22. The duct liner of claim 21, wherein said plastic-containing bonding fiber comprises about 20 to 100 wt. % of said non-liquid formaldehyde-free binder.

23. A formaldehyde-free duct liner of any claim 1 to 22 wherein said duct liner is a final mat having a first side and a second side and comprising a facing layer bonded to at least one of the two sides.

## Patentansprüche

1. Im Wesentlichen Formaldehyd-freie Kanaldecklage (10), welche aufweist:
eine Faserkomponente (60, 62); und
ein nicht-flüssiges, im Wesentlichen Formaldehyd-freies Bindemittel (70, 72), welches mindestens einen Teil der Faserkomponente (60, 62) untereinander bindet, wobei die Kanaldecklage (10) über sein gesamtes Volumen eine im Wesentlichen gleichförmige Dichte besitzt, das nicht-flüssige, im Wesentlichen Formaldehyd-freie Bindemittel Kunststoff enthaltende Bindefasern aufweist, die Faserkomponente und die Kunststoff enthaltenden Bindefasern gleichförmig vermischt sind und durch einen Teil des Kunststoffs der Kunststoff enthaltenden Bindefasern untereinander gebunden sind, und das nicht-flüssige, im Wesentlichen Formaldehyd-freie Bindemittel ein thermoplastisches oder wärmeaushärtbares, pulverförmiges Bindemittel aufweist,
die Kanaldecklage eine erste Seite und eine zweite Seite hat und ferner eine Kaschierschicht aufweist, die auf mindestens eine der beiden Seiten gebunden ist.

2. Kanaldecklage (10) nach Anspruch 1, wobei das nicht-flüssige, im Wesentlichen Formaldehyd-freie Bindemittel (70, 72) im Wesentlichen das einzige Bindemittel in der Kanaldecklage (10) ist.

3. Kanaldecklage (10) nach Anspruch 1, wobei die Faserkomponente (60, 62) frische textile Glasfasern aufweist.

4. Kanaldecklage (10) nach Anspruch 1 oder 2, wobei die Faserkomponente (60, 62) frische textile Glasfasern, frische, im Schleuderverfahren hergestellte Glasfasern, Holzfasern, Hanffasern, Cellulosefasern oder eine Kombination aus diesen aufweist.

5. Kanaldecklage (10) nach Anspruch 3 oder 4, wobei die textilen Glasfasern einen durchschnittlichen Faserdurchmesser von ca. 1 bis 20 micron m besitzen.

6. Kanaldecklage nach den Ansprüchen 3 bis 5, wobei die textilen Glasfasern einen durchschnittlichen Faserdurchmesser von ca. 5 bis 16 micron m besitzen.

7. Kanaldecklage nach den Ansprüchen 3 bis 6, wobei die textilen Glasfasern eine durchschnittliche Faserlänge von ca. 1 bis 20 cm besitzen.

8. Kanaldecklage nach den Ansprüchen 3 bis 7, wobei die textilen Glasfasern eine durchschnittliche Faserlänge von ca. 2,5 bis 12,5 cm besitzen.

9. Kanaldecklage nach den Ansprüchen 1 bis 8, wobei das nicht-flüssige, im Wesentlichen Formaldehyd-freie Bindemittel ca. 10 bis 30 Gew.-% der Kanaldecklage ausmacht.

10. Kanaldecklage nach den Ansprüchen 1 bis 9, wobei das nicht-flüssige, im Wesentlichen Formaldehyd-freie Bindemittel ca. 12 bis 25 Gew.-% der Kanaldecklage ausmacht.

11. Kanaldecklage nach den Ansprüchen 1 bis 10, wobei das nicht-flüssige, im Wesentlichen Formaldehyd-freie Bindemittel ca. 15 bis 20 Gew.-% der Kanaldecklage ausmacht.

12. Kanaldecklage nach den Ansprüchen 1 bis 11, wobei die Kanaldecklage eine Dichte von ca. 16 bis 56 kg/m³ besitzt.

13. Kanaldecklage nach den Ansprüchen 1 bis 12, wobei die Kanaldecklage eine Dichte von ca. 24 bis 48 kg/m³ besitzt.

14. Kanaldecklage nach den Ansprüchen 1 bis 13, wobei die Kanaldecklage ein Flächengewicht von ca. 50 bis 350 g/m² besitzt.

15. Kanaldecklage nach den Ansprüchen 1 bis 14, wobei die Kanaldecklage ein Flächengewicht von ca. 65 bis 310 g/m² besitzt.

16. Kanaldecklage nach den Ansprüchen 1 bis 15, wobei die Kanaldecklage eine erste Seite und eine zweite Seite hat und ferner eine Kaschierschicht aufweist, die auf mindestens eine der beiden Seiten gebunden ist.

17. Kanaldecklage nach Anspruch 1, wobei die Kaschierschicht ein Gittervliesstoff aus in Wirrlage vorliegenden Natur- oder Synthetikfasern ist.

18. Kanaldecklage nach Anspruch 17, wobei der Gittervliesstoff aus Glas-, Polyolefin-, Polyamid-, Polyester- oder Rayonfasern besteht.

19. Kanaldecklage nach den Ansprüchen 1 bis 18, wobei mindestens eines von der Kanaldecklage und der Kaschierschicht mit einem wasserbeständigen Additiv behandelt ist, das aus Epoxidschaum, Acryl oder Asphalt besteht.

20. Kanaldecklage nach den Ansprüchen 1 bis 19, wobei mindestens eines von der Kanaldecklage und der Kaschierschicht mit einem antimikrobiellen Wirkstoff behandelt ist.

21. Kanaldecklage nach den Ansprüchen 1 bis 20, wobei das mindestens eine nicht-flüssige, im Wesentlichen Formaldehyd-freie Bindemittel eine Mischung aus Kunststoff enthaltenden Bindefasern und mindestens einem im Wesentlichen Formaldehyd-freien, pulverförmigen Bindemittel ist.

22. Kanaldecklage nach Anspruch 21, wobei die Kunststoff enthaltende Bindefaser ca. 20 bis 100 Gew.-% des nicht-flüssigen, im Wesentlichen Formaldehyd-freien Bindemittels aufweist.

23. Im Wesentlichen Formaldehyd-freie Kanaldecklage nach einem der Ansprüche 1 bis 22, wobei die Kanaldecklage eine endgefertigte Matte mit einer ersten Seite und einer zweiten Seite ist, die eine auf mindestens eine der beiden Seiten gebundene Kaschierschicht aufweist.

## Revendications

1. Chemise (10) pour conduit essentiellement exempte de formaldéhyde comprenant:
un composant fibreux (60, 62) et
un liant non liquide (70, 72) essentiellement exempt de formaldéhyde qui lie ensemble au moins une partie dudit composant fibreux (60, 62), ladite chemise (10) pour conduit présentant une densité essentiellement uniforme dans tout son volume, ledit liant non liquide essentiellement exempt de formaldéhyde comprenant des fibres de liaison contenant de la matière plastique, ledit composant fibreux et lesdites fibres de liaison contenant de la matière plastique étant mélangés de manière homogène et liés entre eux par une partie de la matière plastique desdites fibres de liaison contenant de la matière plastique et ledit liant non liquide essentiellement exempt de formaldéhyde comprend un liant en poudre thermoplastique ou thermodurcissable,
ladite chemise pour conduit présente un premier côté et un deuxième côté et comprend en outre une couche de surface liée à au moins un des deux côtés.

2. Chemise (10) pour conduit selon la revendication 1, dans laquelle ledit liant (70, 72) non liquide exempt de formaldéhyde est essentiellement le seul liant présent dans ladite chemise (10) pour conduit.

3. Chemise (10) pour conduit selon la revendication 1, dans laquelle ledit composant fibreux (60, 62) comprend des fibres de verre textiles vierges.

4. Chemise (10) pour conduit selon les revendications 1 ou 2, dans laquelle ledit composant fibreux (60, 62) comprend des fibres de verre textiles vierges, des fibres de verre tournées vierges, des fibres de bois, des fibres de chanvre, des fibres de cellulose ou une combinaison d'entre elles.

5. Chemise (10) pour conduit selon les revendications 3 ou 4, dans laquelle lesdites fibres de verre textiles ont un diamètre moyen compris entre environ 1 et 20 micromètres.

6. Chemise pour conduit selon les revendications 3 à 5, dans laquelle lesdites fibres de verre textiles ont un diamètre moyen compris entre environ 5 et 16 micromètres.

7. Chemise pour conduit selon les revendications 3 à 6, dans laquelle lesdites fibres de verre textiles ont une longueur moyenne d'environ 1 à 20 cm.

8. Chemise pour conduit selon les revendications 3 à 7, dans laquelle lesdites fibres de verre textiles ont une longueur moyenne d'environ 2,5 à 12,5 cm.

9. Chemise pour conduit selon les revendications 1 à 8, dans laquelle ledit liant non liquide essentiellement exempt de formaldéhyde représente environ 10 à 30 % en poids de la chemise pour conduit.

10. Chemise pour conduit selon les revendications 1 à 9, dans laquelle ledit liant non liquide essentiellement exempt de formaldéhyde représente environ 12 à 25 % en poids de la chemise pour conduit.

11. Chemise pour conduit selon les revendications 1 à 10, dans laquelle ledit liant non liquide essentiellement exempt de formaldéhyde représente environ 15 à 20 % en poids de la chemise pour conduit.

12. Chemise pour conduit selon les revendications 1 à 11, dans laquelle ladite chemise pour conduit a une masse spécifique comprise entre environ 16 et 56 kg/m³.

13. Chemise pour conduit selon les revendications 1 à 12, dans laquelle ladite chemise pour conduit a une masse spécifique comprise entre environ 24 et 48 kg/m³.

14. Chemise pour conduit selon les revendications 1 à 13, dans laquelle ladite chemise pour conduit a un grammage d'environ 50 à 350 gm/m².

15. Chemise pour conduit selon les revendications 1 à 14, dans laquelle ladite chemise pour conduit a un grammage d'environ 65 à 310 gm/m².

16. Chemise pour conduit selon les revendications 1 à 15, dans laquelle ladite chemise pour conduit présente un premier côté et un deuxième côté et comprend en outre une couche de surface liée à au moins un des deux côtés.

17. Chemise pour conduit selon la revendication 1, dans laquelle ladite couche de surface est une feuille de fibres de non tissé constitué de fibres naturelles ou synthétiques orientées aléatoirement.

18. Chemise pour conduit selon la revendication 17, dans laquelle ledit non tissé est constitué de fibres de verre, de polyoléfine, de polyamide, de polyester ou de rayonne.

19. Chemise pour conduit selon les revendications 1 à 18, dans laquelle ladite chemise pour conduit et/ou ladite couche de surface sont traitées par un additif résistant à l'eau constitué d'une mousse d'époxy, d'un acrylique ou d'asphalte.

20. Chemise pour conduit selon les revendications 1 à 19, dans laquelle ladite chemise pour conduit et/ou ladite couche de surface sont traitées par un agent antimicrobien.

21. Chemise pour conduit selon les revendications 1 à 20, dans laquelle ledit ou lesdits liants non liquides essentiellement exempts de formaldéhyde sont un mélange de fibres de liaison contenant de la matière plastique et d'au moins un liant en poudre essentiellement exempt de formaldéhyde.

22. Chemise pour conduit selon la revendication 21, dans laquelle ladite fibre de liaison contenant de la matière plastique contient d'environ 20 à 100 % en poids dudit liant non liquide et essentiellement exemple de formaldéhyde.

23. Chemise pour conduit essentiellement exempte de formaldéhyde selon l'une des revendications 1 à 22, dans laquelle ladite chemise pour conduit est un mat final qui présente un premier côté et un deuxième côté et qui comprend une couche de surface liée à au moins l'un des deux côtés.
